Europäisches Patentamt

European Patent Office

Office européen des brevets

(19)

(11) Veröffentlichungsnummer: **0 154 726**
**B1**

(12) **EUROPÄISCHE PATENTSCHRIFT**

(45) Veröffentlichungstag der Patentschrift:
**05.10.88**

(21) Anmeldenummer: **84116486.6**

(22) Anmeldetag: **28.12.84**

(51) Int. Cl.⁴: **B 01 D 35/00,** B 01 D 29/38

(54) **Rückspülfilter.**

(30) Priorität: **15.03.84 DE 3409473**

(43) Veröffentlichungstag der Anmeldung:
**18.09.85 Patentblatt 85/38**

(45) Bekanntmachung des Hinweises auf die Patenterteilung:
**05.10.88 Patentblatt 88/40**

(84) Benannte Vertragsstaaten:
**AT CH FR GB IT LI**

(56) Entgegenhaltungen:
**EP - A - 0 078 727**
**DE - A - 1 808 757**
**US - A - 4 064 046**

(73) Patentinhaber: **Judo Wasseraufbereitung GmbH, Hohreuschstrasse 39-41, D-7057 Winnenden (DE)**

(72) Erfinder: **Schuler, Hansjörg, Reisbachstrasse 3, D-7150 Backnang (DE)**

(74) Vertreter: **Patentanwälte Kohler - Schwindling - Späth, Hohentwielstrasse 41, D-7000 Stuttgart 1 (DE)**

## Beschreibung

Die Erfindung betrifft ein Rückspülfilter mit einem Gehäuse, das von einem Filtersieb in eine mit einem Einlass verbundene Einlasskammer und eine mit einem Auslass verbundene Auslasskammer unterteilt ist, mit einer Rückspüleinrichtung, die eine in der Einlasskammer angeordnete und mittels einer Antriebseinrichtung über die Fläche des Filtersiebes hinwegführbare Absaugdüse umfasst, und mit einem ein Teil der Gehäusewand bildenden, parallel oder koaxial zum Filtersieb angeordneten Schauglas. Ein solches Rückspülfilter wird beispielsweise von der Firma Benckiser Wassertechnik GmbH hergestellt und vertrieben und ist in deren Prospekt 04/10/GT 12/ 83 beschrieben. Dieses bekannte Rückspülfilter hat ein zylindrisches Filtersieb, das von einem durchsichtigen, zylindrischen Gehäuseteil konzentrisch umgeben ist. Die Einlasskammer befindet sich im Inneren des zylindrischen Filtersiebes, in dem sich auch die Absaugdüse befindet. Die Absaugdüse hat die Form eines Kreisrings, der in Axialrichtung über die Innenfläche des Filtersiebes hinwegführbar ist.

Die als Schauglas ausgebildete Gehäusewand solcher Filter soll es dem Benutzer ermöglichen, den Verschmutzungsgrad des Filtersiebes zu überwachen und zu gegebener Zeit das Filter mittels der Rückspüleinrichtung zu reinigen. Insbesondere für Haushalts-Rückspülfilter ist eine solche Überwachung bedeutsam, weil hierfür Einrichtungen zur automatischen Überwachung der Verschmutzung des Filtersiebes und Einleitung eines Rückspülvorganges ungeeignet sind. Abgesehen davon, dass solche Einrichtungen sehr teuer sind, setzt ihre einwandfreie Funktion auch einen im wesentlichen konstanten Durchfluss voraus. Bei dem stark wechselnden Durchfluss, wie er verbrauchsabhängig im Haushalt vorkommt, unterliegt der Differenzdruck am Filter zu starken Schwankungen, als dass hiervon zuverlässige Werte für eine automatische Rückspülung abgeleitet werden könnten.

Obwohl die Anordnung eines Schauglases zur Überwachung der Verschmutzung des Filtersiebes insbesondere für Haushalts-Anlagen eine adäquate Massnahme darstellt, führt auch sie nicht zu befriedigenden Ergebnissen, weil das Schauglas schon nach relativ kurzer Zeit undurchsichtig wird und damit eine Beobachtung des Filtersiebes nicht mehr zulässt. Schuld daran ist ein Bewuchs durch Algen sowie die Bildung eines Eisen- und/ oder Manganbelages. Algen sowie Eisen und Mangan finden sich in allen üblichen Trink- und Brauchwässern, so dass ein Beschlagen oder Bewachsen des Schauglases oder eines durchsichtigen Gehäuseteiles nicht vermeidbar ist.

Der Erfindung liegt die Aufgabe zugrunde, dem Benutzer von Rückspülfiltern der eingangs genannten Art die Möglichkeit zu geben, den Verschmutzungsgrad des Filtersiebes zuverlässig zu überwachen, ohne dass hierzu der Einsatz komplizierter Einrichtungen erforderlich wäre.

Diese Aufgabe wird nach der Erfindung dadurch gelöst, dass die Einlasskammer auf der dem Schauglas zugewandten Seite des Filtersiebes angeordnet und die sich darin befindende Absaugdüse an ihrer dem Schauglas zugewandten Seite mit einem Scheibenwischer für das Schauglas versehen ist.

Die Anordnung eines Scheibenwischers für das Schauglas an der Absaugdüse hat zur Folge, dass bei jedem Rückspülvorgang, bei dem die Absaugdüse über die Oberfläche des Filtersiebes hinweggeführt wird, zugleich auch der Scheibenwischer über das zum Filtersieb parallele Schauglas hinweggeführt wird und dadurch das Schauglas von einem daran anhaftenden Belag reinigt. Bei der üblichen Trinkwasserqualität ist das Filtersieb verschmutzt und bedarf einer Reinigung durch Rückspülen, bevor das Schauglas durch die Ablagerung von Algen, Mangan und Eisen undurchsichtig geworden ist. Da beim Rückspülen zwangsläufig auch eine Reinigung des Schauglases stattfindet, ist gewährleistet, dass die sich von Reinigung zu Reinigung bildende Schicht niemals so dick wird, dass sie die Durchsichtigkeit des Schauglases erheblich beeinträchtigt oder einer Reinigung einen nennenswerten Widerstand entgegensetzt.

Die Reinigung des Schauglases kann in weiterer Ausgestaltung der Erfindung dadurch unterstützt werden, dass der Scheibenwischer von wenigstens einer elastischen Lippe am Rand einer dem Schauglas zugewandten, weiteren Absaugdüse gebildet wird. Die Kombination des Scheibenwischers mit einer weiteren Absaugdüse gewährleistet, dass auch die beim Wischen über das Schauglas gelösten Schmutzteilchen sofort abgeführt werden. Der Reinigungseffekt wird dadurch besonders gross.

Es ist ohne weiteres möglich, dass die Erfindung unabhängig von der Form des Filtersiebes ist. Es können durchaus plattenförmige Filtersiebe Verwendung finden, denen ebene Schaugläser gegenüberstehen. Die Erfindung lässt sich aber auch dort mit besonderem Vorteil anwenden, wo das Filtersieb und das Schauglas auf zueinander konzentrischen Zylinderflächen angeordnet sind, wie es bei dem eingangs erwähnten, bekannten Rückspülfilter der Fall ist. Für die erfindungsgemässe Anordnung ist es jedoch zweckmässiger, wenn die Absaugdüse mit dem Scheibenwischer nicht in Längsrichtung der Zylinderachse verschiebbar, sondern um die Achse der Zylinderfläche drehbar gelagert ist, wie es beispielsweise aus der DE-PS 2 852 611 und der DE-PS 3 209 216 an sich bekannt ist. Aus beiden Druckschriften ist es auch an sich bekannt, die zu filtrierende Flüssigkeit dem zylindrischen Filtersieb von aussen her zuströmen zu lassen, jedoch weisen diese bekannten Rückspülfilter keine Schaugläser zur Überwachung des Filtersieb-Zustandes auf. Wie aus diesen Druckschriften an sich bekannt, können auch bei dem erfindungsgemässen Rückspülfilter die Absaugdüse und der Scheibenwischer sich längs einer Mantellinie der Zylinderflächen über deren ganze Höhe erstrecken.

Bei einer besonders bevorzugten Ausführungsform der Erfindung haben die Absaugdüse und der Scheibenwischer sowohl in Umfangsrichtung als auch in Achsrichtung gegenüber den Abmessungen der Zylinderflächen kleine Abmessungen und sind mittels der Antriebseinrichtung längs einer Schraubenlinie über die Zylinderfläche hinweg bewegbar. Auf diese Weise wird eine besonders gute Reinigungswirkung sowohl für das Filtersieb als auch für das zylindrische Schauglas erzielt. Da die Düse einen nur sehr kleinen Querschnitt hat, wird hier eine besonders hohe Strömungsgeschwindigkeit erzielt, ohne dass das aus dem Rückspülfilter austretende Rückspülwasser eine zu starke Strömung hat, und es wird infolge der sehr hohen Strömungsgeschwindigkeit des Rückspülwassers im Bereich der Absaugdüse eine besonders gute Reinigung erzielt. Desgleichen ist bei kurzer Länge des Scheibenwischers gewährleistet, dass er in jeder Stellung einwandfrei an der Oberfläche des Schauglases anliegt und daher ebenfalls eine besonders gute Reinigungswirkung erzielt. Zugleich bleibt selbst dann, wenn ein relativ hoher Anpressdruck für den Scheibenwischer gewählt wird, die davon ausgehende Bremswirkung wegen der kleinen Fläche relativ gering, so dass die Bewegung von Absaugdüse und Scheibenwischer, die bei solchen Rückspülfiltern gewöhnlich von Hand erteilt werden muss, keine nennenswerte Kraftanstrengung des Benutzers erfordert. Auch dann, wenn einfache motorische Antriebsvorrichtungen für die Bewegung der Absaugdüse und des Scheibenwischers verwendet werden, wie beispielsweise kleine Elektromotoren, hydraulische Motoren und dergleichen, ist es von Bedeutung, dass solche Motoren keine grossen Kräfte aufzubringen brauchen.

Die Erfindung wird im folgenden anhand der in der Zeichnung dargestellten Ausführungsbeispiele beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Es zeigen:

Fig. 1 einen Längsschnitt durch ein erstes Rückspülfilter nach der Erfindung,

Fig. 2 einen Teilschnitt längs der Linie II–II durch das Rückspülfilter nach Fig. 1 und

Fig. 3 einen Längsschnitt durch ein weiteres Rückspülfilter nach der Erfindung.

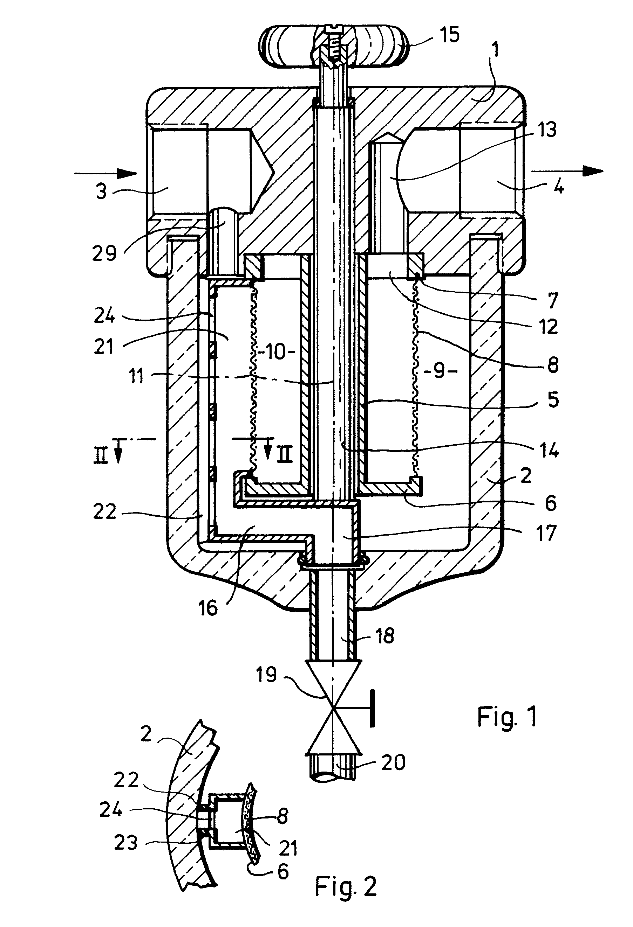

Das in den Fig. 1 und 2 dargestellte Rückspülfilter weist ein Gehäuse auf, das aus einem zylindrischen Kopfstück 1 und einem mit dessen Unterseite verschraubten Filtertopf 2 besteht. Das Kopfstück 1 weist zwei radial gerichtete Anschlüsse auf, von denen der eine Anschluss als Einlass 3 und der andere Anschluss als Auslass 4 dient. Mit der Unterseite des Kopfstückes 1 ist ein konzentrisch zum Filtertopf 2 angeordneter Einsatz verschraubt, der von einem Rohr 5 und an dessen Enden befestigten Scheiben 6, 7 besteht, zwischen deren Rändern ein zylindrisches Filtersieb 8 angeordnet ist. Das Filtersieb 8 unterteilt das Innere des Filtertopfes 2 in zwei Kammern 9, 10, von denen die äussere Kammer 9 über einen zur Achse 11 des Filtertopfes 2 und des Filtersiebes 8 parallelen Kanal 29 mit dem Einlass 3 in Verbindung steht, wogegen die innere Kammer 10 über eine Bohrung 12 in der Scheibe 7 und einen zur Achse 11 parallelen Kanal 13 im Kopfstück 1 mit dem Auslass 4 in Verbindung steht. Eine zentrale Bohrung im Kopfstück 1 und das Rohr 5 des Einsatzes wird von einer Welle 14 durchsetzt, die an ihrem aus dem Kopfstück 1 herausragenden Ende ein Handrad 15 trägt. An dem aus dem Rohr 5 des Einsatzes nach unten herausragenden Ende ist an der Welle ein Rohrabschnitt 16 befestigt, der einen im Boden des Filtertopfes 2 um die Achse 11 drehbar gelagerten und gegenüber dem Boden des Filtertopfes 2 abgedichteten Abschnitt 17 aufweist. Daran schliesst sich ein fester Rohrabschnitt 18 an, der zu einem Rückspülventil 19 führt, an das sich eine Spülleitung 20 anschliesst. Der Rohrabschnitt 16 erstreckt sich von dem um die Achse 11 drehbaren Abschnitt 17 radial am Boden des Filtertopfes 2 entlang bis an dessen Wandung und geht dort in eine Absaugdüse 21 über, die nach Art eines langgestreckten Kastens ausgebildet ist, der sich längs einer Mantellinie des Filtersiebes 8 über dessen ganze Höhe erstreckt. Ausserdem sind an der Rückseite der kastenförmigen Absaugdüse 21 zwei elastische Lippen 22, 23 angebracht, die sich bis zur zylindrischen Innenseite des Filtertopfes 2 erstrecken. Die elastischen Lippen 22, 23 bilden Scheibenwischer für das Sichtfenster, das von dem aus einem durchsichtigen Material bestehenden Filtertopf 2 gebildet wird. In der dem Filtersieb 8 abgewandten Wand der kastenförmigen Absaugdüse 21 befinden sich Durchbrechungen 24, die ein Absaugen des durch die Scheibenwischer gelösten Schmutzes begünstigen.

Bei Normalbetrieb ist das Rückspülventil 19 geschlossen. Das über den Einlass 3 zufliessende Wasser gelangt in die äussere Kammer 9 zwischen Filtertopf 2 und Filtersieb 8, passiert das Filtersieb und gelangt dadurch in die innerhalb des Filtersiebes 18 gelegene Kammer 10, die über den Kanal 13 mit dem Auslass 4 in Verbindung steht. Das durch den Einlass zuströmende Brauchwasser fliesst also durch den Auslass 4 gefiltert wieder aus.

Das von dem durchsichtigen Filtertopf 2 gebildete Schauglas erlaubt eine Beobachtung des Filtersiebes 8. Da das Brauchwasser von aussen zuströmt und sich daher Verunreinigungen an der dem Schauglas zugewandten Seite des Filtersiebes 8 absetzen, ist der Verschmutzungsgrad des Filtersiebes besonders gut beobachtbar. Hat der Verschmutzungsgrad einen Zustand erreicht, bei dem eine Reinigung des Filtersiebes angebracht erscheint, wird das Rückspülventil 19 geöffnet, durch das nunmehr Wasser über die Absaugdüse 21 und die Rohrabschnitte 16, 17 aus dem Filter abfliessen kann. Dieses Wasser kommt aus der Kammer 9, durchfliesst das Filtersieb 8 an anderer Stelle zur Kammer 10 und durchströmt wiederum das Filtersieb 8 in umgekehrter Richtung von der inneren Kammer 10 zu der Absaugdüse 21. Da die Absaugdüse nur einen schmalen Bereich längs einer Mantellinie des Filtersiebes 8 überdeckt, wird nur ein solcher kleiner Abschnitt gereinigt. Es muss daher die Filterdüse 21 durch Drehen am Handrad 15 über den Umfang des Filtersiebes 8 hinweggeführt werden. Dabei überstreichen auch die elastischen Lippen 22, 23 die Innenseite des als Schauglas ausgebildeten Filtertopfes 2 und reinigen das Schauglas nach Art eines Scheibenwischers zuverlässig von allen Verunreinigungen. Die abgestreiften Verunreinigungen werden sofort durch einen Wasserstrom entfernt, der an den oberen und unteren Enden des zwischen den beiden Lippen 22, 23 gebildeten Kanales eintritt und dann durch die Durchbrechungen 24 ebenfalls in die Absaugdüse 21 gelangt. Es ist ersichtlich, dass bei jedem Rückspülen auch eine zuverlässige Reinigung der Innenseite des Filtertopfes 2 erfolgt, mit dem Ergebnis, dass diese Innenseite regelmässig von Verunreinigungen wie Algenbewuchs sowie Mangan- und/oder Eisenniederschlägen gereinigt wird und dadurch seine Durchsichtigkeit zuverlässig beibehält, die zur Beobachtung des Verschmutzungszustandes des Filtersiebes von grosser Bedeutung ist.

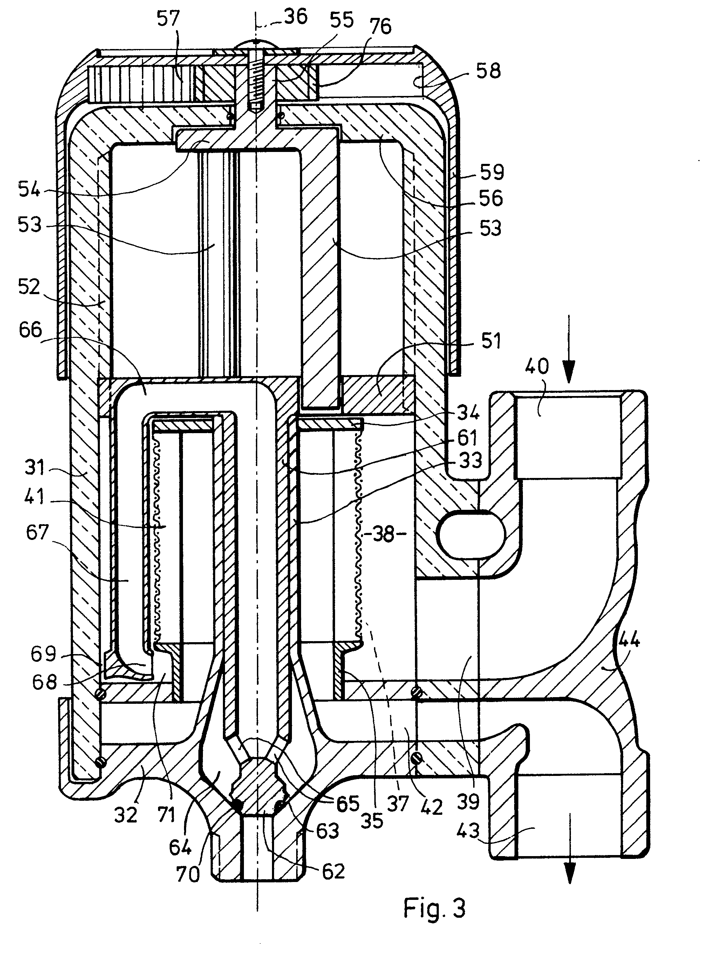

Die in Fig. 3 dargestellte Ausführungsform eines Rückspülfilters weist wiederum ein topfförmiges Gehäuseteil 31 aus einem durchsichtigen Werkstoff auf, das jedoch bei dieser Ausführungsform mit dem offenen Ende nach unten angeordnet ist. Es ist nach unten durch ein im wesentlichen zylindrisches Bodenstück 32 abgeschlossen, von dem ausgehend sich ein zentrales Rohr 33 in das Innere des Gehäuseteiles 31 erstreckt. Das obere, freie Ende des Rohres trägt eine Scheibe 34. An der Oberseite des Bodenstückes 32 ist ein Ringkörper 35 angebracht, dessen Durchmesser im wesentlichen dem Durchmesser der Scheibe 34 entspricht. Zwischen den Rändern der Scheibe 34 und des Ringkörpers 35 ist das zur Achse 36 des Gehäuseteiles 31 konzentrische, zylindrische Filtersieb 37 angeordnet. Die ausserhalb des Filtersiebes 37 liegende Einlasskammer 38 steht über einen in der Wand des Gehäuseteiles 31 angeordneten Kanal 39 mit einem Einlass 40 in Verbindung. Von der innerhalb des Filtersiebes 37 liegenden Auslasskammer 41 führen im Bodenstück 32 angeordnete Radialkanäle 42, die mit der Auslasskammer 41 über den Innenraum des Ringkörpers 35 in Verbindung stehen, zu einem Auslass 43. Einlass 40 und Auslass 43 sind in einem besonderen Fitting 44 angeordnet, das an der Aussenseite des Gehäuseteils 31 befestigt ist.

Die Rückspüleinrichtung dieses Filters umfasst eine Platte 51, die in einem an das Filtersieb 37 angrenzenden Abschnitt des Gehäuseteiles 31 angeordnet ist. Diese Platte 51 erstreckt sich über den gesamten Querschnitt des zylindrischen Gehäuseteiles 31 und greift mit einem an ihrem Umfang angebrachten Gewinde in ein Innengewinde 52 des Gehäuseteiles ein. Diese Platte ist mittels eines Schlüssels drehbar, der drei zur Achse 36 des Gehäuseteiles 31 parallele Stangen 53 aufweist, die am Umfang einer Scheibe 54 angebracht sind. In Fig. 3 sind nur zwei dieser Stangen 53 sichtbar. Die Scheibe 54 ist mittels eines Achszapfens 55 in der oberen Querwand 56 des zylindrischen Gehäuseteiles 31 drehbar gelagert. Ausserhalb des Gehäuseteiles 31 sitzt auf dem Achszapfen 55 ein Zahnrad 76, das über ein weiteres Zahnrad 57 mit der Innenverzahnung 58 einer Kappe 59 in Eingriff steht, die ebenfalls um die Achse 36 drehbar gelagert ist und den gesamten, sich an den vom Filtersieb 37 eingenommenen Abschnitt des Filtergehäuses anschliessenden Abschnitt überdeckt. Es ist ersichtlich, dass beim Drehen der Kappe 59 über die Zahnräder 76, 57 auch die Scheibe 54 mit den Stangen 53 in Umdrehung versetzt wird, welche ihrerseits die Platte 51 mitnehmen. Die Stangen 53 greifen lediglich in Durchgangsbohrungen der Platte 51 ein, so dass die Platte 51 auf den Stangen 53 verschiebbar und daher beim Drehen eine durch die Steigung des Gewindes 52 bestimmte Bewegung in Richtung der Gehäuselängsachse 36 ausführen kann.

Die Platte 51 trägt ein zentrales Rohr 61, welches das Rohr 33 des Bodenstückes 32 koaxial durchdringt. Am Ende dieses Rohres befindet sich das Verschlussstück 62 eines Rückspülventiles, das mit einem in einem Hohlraum 64 des Bodenstückes 32 angeordneten Ventilsitz 63 zusammenwirkt. Das Innere des Rohres 61 steht über Bohrungen 65 mit dem Hohlraum 64 im Bodenstück 32 in Verbindung. Das Rohr 61 steht über einen sich radial erstreckenden Kanal 66 mit einem Rohr 67 in Verbindung, das sich an der Aussenseite des Filtersiebes 37 entlang erstreckt und dessen Länge etwas grösser ist als diejenige des Filtersiebes. Am Ende dieses äusseren Rohres befindet sich eine dem Filtersieb 37 zugewandte Düse 68, deren axiale Länge bedeutend geringer ist als die Länge des Filtersiebes 37, und die auch in Umfangsrichtung des Filtersiebes nur eine geringe Ausdehnung hat. An der der Düse 68 abgewandten Seite befindet sich am Ende des Rohres 67 eine elastische Lippe 69, die wiederum an der Innenseite des topfförmigen Gehäuseteiles 31 fest anliegt.

In der in Fig. 3 gezeigten, untersten Stelle der Platte 51 liegt das Verschlussstück 62 mit seinen Dichtungsringen 70 am Ventilsitz 63 an, so dass das Filtergehäuse an dieser Stelle abgeschlossen ist. Bei geöffneter Zulaufleitung fliesst daher Wasser über den Einlass 40 zu, gelangt über den Kanal 39 in die Einlasskammer 38, von dort durch das zylindrische Filtersieb 37 in die Auslasskammer 41 und endlich von dort über die Radialkanäle 42 in den Auslass 43. Zum Rückspülen genügt es, an der als Handrad dienenden Kappe 59 zu drehen und dadurch über die Innenverzahnung 58 und die Zahnräder 57, 76 den Schlüssel mit den Stangen 53 in Umdrehung zu versetzen, welche die Platte 51 mitnehmen. Gleichzeitig wird der Platte 51 von dem Innengewinde 52 eine Axialbewegung erteilt, der auch das Rohr 61 mit dem Verschlussstück 62 folgt, so dass das Rückspülventil geöffnet wird. Es kann nunmehr Wasser von der Auslassseite des Filters über die Auslasskammer 41 und die Düse 68 in das Rohr 67 strömen, von dem es über den Kanal 66, das Rohr 61 und die Bohrungen 65 aus dem Rückspülventil austreten kann. Dabei befindet sich die Düse 68 zunächst im Bereich einer Rinne 71, die sich unterhalb des Filtersiebes 37 am Umfang des Ringkörpers 35 befindet, um von dort am Filterboden abgesetzten Schlamm abzusaugen. Durch Drehen der Platte 51 wird die Düse 68 wiederum über den ganzen Umfang der Rinne 71 hinwegbewegt. Zugleich überstreicht auch die als Scheibenwischer dienende elastische Lippe 69 die Innenwand des Gehäuseteiles 31, die als Sichtfenster dient. Infolge der durch das Gewinde der Platte 51 erteilten Axialbewegung führen die Düse 68 und die Lippe 69 nicht nur eine Bewegung in Umfangsrichtung, sondern ebenfalls in Achsrichtung aus, wodurch die Düse und der Scheibenwischer über die zugeordnete Zylinderfläche in Form einer Schraubenlinie hinwegbewegt werden. Der sehr kleine Düsenquerschnitt führt zu extrem hohen Geschwindigkeiten des Rückspülwassers und damit zu einer ausserordentlich guten Reinigungswirkung. Ähnlich ist auch ein nur auf kurzer Strecke an dem Schauglas anliegender Scheibenwischer besonders wirksam, weil auch ohne Einhaltung besonderer Toleranzen das Anliegen des Scheibenwischers auf seiner ganzen Länge stets gewährleistet ist. Die kurze Länge des Scheibenwischers erlaubt auch die Anwendung sehr hoher Anpresskräfte, ohne dass der Kraftaufwand zur Betätigung der Rückspüleinrichtung übermässig gross wird. Die bei dem dargestellten Ausführungsbeispiel vorgesehene Zahnrad-Übersetzung zwischen der Platte 51 und der Kappe 59 gewährleistet, dass nur wenige Drehungen an der Kappe genügen, um die Düse und den Scheibenwischer über die gesamte zu reinigende Fläche hinwegzuführen.

Es versteht sich, dass die Erfindung nicht auf die dargestellten Ausführungsbeispiele beschränkt ist, sondern Abweichungen davon möglich sind, ohne den durch die Patentansprüche gesteckten Rahmen der Erfindung zu verlassen. Beispielsweise kann die Absaugdüse mit dem Scheibenwischer auch das zylindrische Sieb ringförmig umschliessen und die Reinigung des Siebes, sowie auch des koaxial angeordneten Schauglases, durch Auf- und Abbewegungen der ringförmigen Absaugdüse erfolgen. Insbesondere ist die Erfindung auch bei solchen Anordnungen anwendbar, bei denen die Filtersiebe eben, teilzylindrisch, kegelförmig oder dergleichen ausgebildet sind. Bedingung ist lediglich, dass Filtersieb und Schauglas auf Flächen liegen, die zumindest zueinander parallele Kurvenabschnitte aufweisen, wozu beispielsweise koaxiale Kegelflächen gehören.

## Patentansprüche

1. Rückspülfilter mit einem Gehäuse, das von einem Filtersieb in eine mit einem Einlass verbundene Einlasskammer und eine mit einem Auslass verbundene Auslasskammer unterteilt ist, mit einer Rückspüleinrichtung, die eine in der Einlasskammer angeordnete und mittels einer Antriebseinrichtung über die Fläche des Filtersiebes hinwegführbare Absaugdüse umfasst, und mit einem ein Teil der Gehäusewand bildenden, parallel oder koaxial zum Filtersieb angeordneten Schauglas, dadurch gekennzeichnet, dass die Einlasskammer (9, 38) auf der dem Schauglas (2, 31) zugewandten Seite des Filtersiebes (8, 37) angeordnet und die sich darin befindende Absaugdüse (21, 68) an ihrer dem Schauglas zugewandten Seite mit einem Scheibenwischer (22, 23, 69) für das Schauglas versehen ist.

2. Rückspülfilter nach Anspruch 1, dadurch gekennzeichnet, dass der Scheibenwischer von wenigstens einer elastischen Lippe (22, 23) am Rand einer dem Schauglas (2) zugewandten, weiteren Absaugdüse gebildet wird.

3. Rückspülfilter nach Anspruch 1 oder 2, dadurch gekennzeichnet, dass das Filtersieb (8, 37) und das Schauglas (2, 31) auf zueinander konzentrischen Zylinderflächen angeordnet sind und die Absaugdüse (21, 68) mit dem Scheibenwischer (22, 23, 69) um die Achse (11, 36) der Zylinderflächen drehbar gelagert ist.

4. Rückspülfilter nach Anspruch 3, dadurch gekennzeichnet, dass die Absaugdüse (21) und der Scheibenwischer (22, 23) sich längs einer Mantellinie der Zylinderflächen über deren ganze Höhe erstrecken.

5. Rückspülfilter nach Anspruch 3, dadurch gekennzeichnet, dass die Absaugdüse (68) und der Scheibenwischer (69) sowohl in Umfangsrichtung als auch in Achsrichtung gegenüber den Abmessungen der Zylinderflächen kleine Abmessungen haben und mittels der Antriebseinrichtung längs einer Schraubenlinie über die Zylinderflächen hinwegbewegbar sind.

### Claims

1. A flush-back filter with a housing which is subdivided by a filter screen into an inlet chamber connected to an inlet and an outlet chamber connected to an outlet, a flush-back device, which comprises a suction nozzle arranged in the inlet chamber and which can be passed over the surface of the filter screen by means of a drive device, and with a sight glass forming a part of the housing wall and arranged parallel or coaxially to the filter screen, characterized in that the inlet chamber (9, 38) is arranged on the side of the filter screen (8, 37) facing the sight glass (2, 31) and the suction nozzle (21, 68) located therein is provided, on its side facing the sight glass, with a screen wiper (22, 23, 69) for the sight glass.

2. A flush-back filter according to Claim 1, characterized in that the screen wiper is formed by at least one elastic lip (22, 23) on the edge of a further suction nozzle facing the sight glass (2).

3. A flush-back filter according to Claim 1 or 2, characterized in that the filter screen (8, 37) and the sight glass (2, 31) are arranged on cylindrical surfaces concentric to each other and the suction nozzle (21, 68) with the screen wiper (22, 23, 69) is pivoted about the axis of the cylindrical surfaces.

4. A flush-back filter according to Claim 3, characterized in that the suction nozzle (21) and the screen wiper (22, 23) extend along a generatrix of the cylindrical surfaces over their whole height.

5. A flush-back filter according to Claim 3, characterized in that the suction nozzle (68) and the screen wiper (69) have, both in the peripheral direction and also in the axial direction, smaller dimensions with respect to the dimensions of the cylindrical surfaces, and can be moved along a helical line over the cylindrical surfaces.

**Revendications**

1. Filtre avec lavage à contre-courant, comportant: une enceinte qu'un tamis filtrant subdivise en une chambre d'entrée reliée à une entrée et en une chambre de sortie reliée à une sortie; un dispositif de lavage à contre-courant qui comprend une buse d'aspiration déplaçable, au moyen d'un dispositif d'entraînement, sur la surface du tamis filtrant; et un verre-regard constituant une partie de la paroi de l'enceinte et agencé parallèlement ou coaxialement au tamis filtrant, caractérisé par le fait que la chambre d'entrée (9, 38) est disposée du côté du tamis filtrant (8, 37) tourné vers le verre-regard (2, 31), et la buse d'aspiration (21, 68) s'y trouvant est munie, en son côté vers le verre-regard, d'un essuie-glace (22, 23, 69) pour le verre-regard.

2. Filtre avec lavage à contre-courant selon revendication 1, caractérisé par le fait que l'essuie-glace est constitué par au moins une lèvre élastique (22, 23) sur le bord d'une autre buse d'aspiration tournée vers le verre-regard (2).

3. Filtre avec lavage à contre-courant selon revendication 1 ou 2, caractérisé par le fait que le tamis filtrant (8, 37) et le verre-regard (2, 31) sont agencés sur des surfaces cylindriques mutuellement concentriques, et la buse d'aspiration (21, 68) avec l'essuie-glace (22, 23, 69) est montée de manière à pouvoir tourner autour de l'axe (11, 36) des surfaces cylindriques.

4. Filtre avec lavage à contre-courant selon revendication 3, caractérisé par le fait que la buse d'aspiration (21) et l'essuie-glace (22, 23) s'étendent le long d'une génératrice des surfaces cylindriques, sur toute leur hauteur.

5. Filtre avec lavage à contre-courant selon revendication 3, caractérisé par le fait que la buse d'aspiration (68) et l'essuie-glace (69) ont, aussi bien en direction périmétrique qu'en direction axiale, des dimensions petites par rapport aux dimensions des surfaces cylindriques et sont déplaçables, au moyen du dispositif d'entraînement, le long d'une ligne hélicoïdale, sur les surfaces cylindriques.

Fig. 1

Fig. 2

Fig. 3